# EUROPEAN PATENT SPECIFICATION

(11) **EP 3 742 061 B1**
(45) Date of publication and mention of the grant of the patent: **12.07.2023**
(21) Application number: 20172964.7
(22) Date of filing: 05.05.2020
(51) Int. Cl.: F24F 3/153, F24F 5/00, F24F 13/14, F24F 13/22, F25D 31/00, F24F 110/20

(54) **A REFRIGERATING APPLIANCE, IN PARTICULAR A WINE CELLAR, WITH A HUMIDITY CONTROL SYSTEM**
EINE KÜHLVORRICHTUNG, INSBESONDERE EIN WEINKELLER, MIT EINEM FEUCHTIGKEITSREGELUNGSSYSTEM
UN APPAREIL DE RÉFRIGÉRATION, EN PARTICULIER UNE CAVE À VIN, AVEC UN SYSTÈME DE RÉGULATION DE L'HUMIDITÉ

(30) Priority: 10.05.2019 US 201916408976
(43) Date of publication of application: 25.11.2020
(73) Proprietor: Whirlpool Corporation, Benton Harbor, MI 49022 (US)
(72) Inventor: Stahelin, Rodrigues, 21024 Cassinetta di Biandronno (VA) (IT); Pauli, Douglas, 21024 Cassinetta di Biandronno (VA) (IT); Parnisari, Matteo, 21024 Cassinetta di Biandronno (VA) (IT)
(74) Representative: Spina, Alessandro

(56) References cited:
- EP-A1- 1 519 118
- CN-A- 103 851 879
- CN-Y- 2 659 240

## Description

The present invention relates to a refrigerating appliance with a humidity control system.

Historically, wine cellars are underground, which provides a cool, damp environment for preserving wine. The ideal temperature for long term storage of wine bottles may range from approximately 10 °C to 15 °C (50 °F to 59 °F) and the relative humidity level may range from approximately 50%-70%. Relative humidity levels in this range may prevent the stopper, which is conventionally made from cork, from drying out and damaging the seal. Relative humidity levels above this range can provide an environment for mold growth. EP1519118A1 discloses an air conditioning system with a humidifier associated to a heat exchanger. The system includes a bypass conduit for avoiding to supply too hot air in a living space. CN103851879A1 discloses a wine cellar in which the humidity level is adjusted by varying the power of a water heater.

According to the invention, there is provided a refrigerating appliance as defined in claim 1.

### BRIEF DESCRIPTION OF THE DRAWINGS

In the drawings:
FIG. 1 is a perspective view of a wine cooler according to the invention;
FIG. 2 is a cross-sectional view of the wine cooler of FIG. 1 along line II-II;
FIG. 3 is a schematic view of a refrigerating appliance with a humidity control system according to the invention;
FIG. 4 is a schematic view of a humidity control system of a refrigerating appliance according to the invention;
FIG. 5 is a schematic view of a refrigerating appliance according to the invention, with the humidity control system of FIG. 4;
FIG. 6 is a schematic view of a refrigerating appliance according to the invention, with the humidity control system of FIG. 4;
FIG. 7 is a schematic view of a humidity control system of a refrigerating appliance which is not in accordance with the invention; and
FIG. 8 is a flow chart demonstrating a method of controlling a water vapor content of an interior of a refrigerating appliance; this method does not form part of the present invention.

The components in the figures are not necessarily to scale, emphasis instead being placed upon illustrating the principles described herein.

### DETAILED DESCRIPTION

The present invention relates to a refrigerating appliance. Accordingly, the apparatus components have been represented, where appropriate, by conventional symbols in the drawings, showing only those specific details that are pertinent to understanding the embodiments of the present invention so as not to obscure the disclosure with details that will be readily apparent to those of ordinary skill in the art having the benefit of the description herein. Further, like numerals in the description and drawings represent like elements.

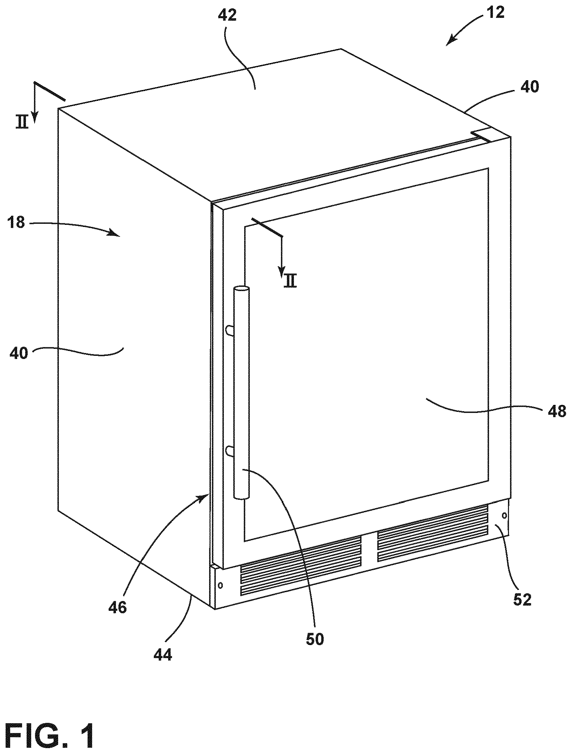

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that an apparatus that comprises a list of elements does not include only those elements but may include other elements not expressly listed or inherent to such apparatus. An element preceded by "comprises a... " does not, without more constraints, preclude the existence of additional identical elements in the apparatus that comprises the element.

Referring to FIGS. 1-3, reference numeral 10 generally designates a humidity control system for a refrigerating appliance 12, in the form of a wine cooler. The humidity control system 10 includes a damper 14 configured to control airflow 16 between a cabinet 18 defining a cavity, or an interior 20, and the humidity control system 10. A heater 22 is provided and configured to receive the airflow 16. A porous medium 24 is disposed proximate to the heater 22. A water inlet 26 is configured to selectively supply water to the porous medium 24. A controller 30 is configured to adjust a supply of water 28 to the water inlet 26. Upon a humidification signal the controller adjusts the damper 14 to allow the passage of airflow 16 from the interior 20 of the cabinet 18 to the heater 22 and the porous medium 24. Then, the airflow 16 is humidified via the porous medium 24 and the humidified airflow 16 is returned to the interior 20 of the cabinet 18.

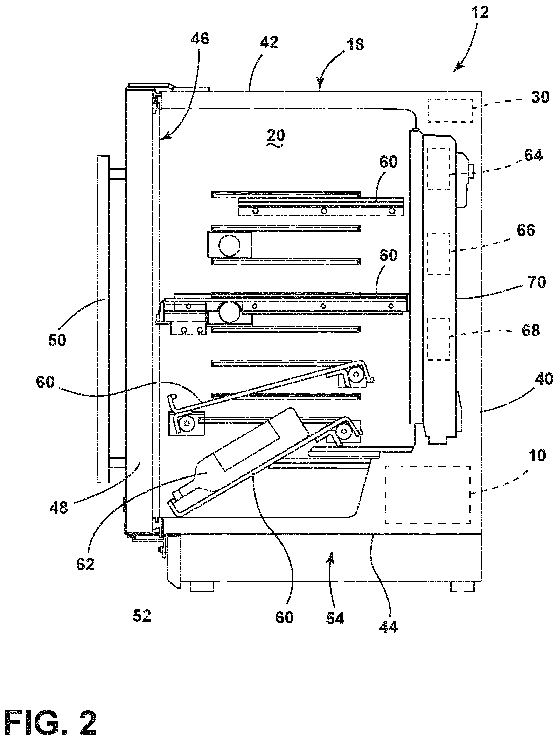

Referring now to FIG. 1, the refrigerating appliance 12 is illustrated. Although the refrigerating appliance 12 is shown as a wine cooler, or wine cellar, the refrigerating appliance 12 may be in the form of any cooling appliance such as a refrigerator, a freezer, and any combination thereof. For example, the refrigerating appliance 12 may include an upper compartment, or cavity, configured for wine storage and a lower compartment configured for freezing. The cabinet 18 may include a plurality of sidewalls 40, a top wall 42 and a bottom wall 44, defining an access opening 46. A door assembly 48 may selectively cover the access opening 46. A handle 50 may be provided to facilitate opening and closing of the door assembly 48 to selectively cover the access opening 46. The refrigerating appliance 12 may further include a grille 52 provided to cover a ventilation space 54 (FIG. 2). The refrigerating appliance 12 is not limited to the configuration illustrated herein, but can be modified within the limits of claim 1.

FIG. 2 further illustrates the interior 20 of a refrigerating appliance 12 according to the invention. The interior 20 may include a plurality of racks, or shelves 60, provided for supporting objects such as food, drinks, etc. In some examples, the shelves 60 are configured to support wine bottles 62.

The refrigerating appliance 12 may include a refrigeration system including an evaporator 64 in fluid communication with a compressor 66 and a condenser 68 via fluid control devices such as blowers, valves, tubes, conduits, orifices, dampers and the like. In some examples, the evaporator 64, compressor 66, and condenser 68 are at least partially located within a cooling housing 70. In this way, the refrigeration system may be in the form of a sealed refrigeration system. In some examples, the humidity control system 10 may be positioned at the bottom of the cabinet 18 in between the cabinet 18 and the interior 20. In further examples, the humidity control system 10 is positioned below the cooling housing 70. The controller 30 may be configured to control the components of the refrigeration system in order to provide cooling to the interior 20 of the refrigerating appliance 12. The controller 30 is configured to control the humidity control system 10 to provide moisture to the interior 20.

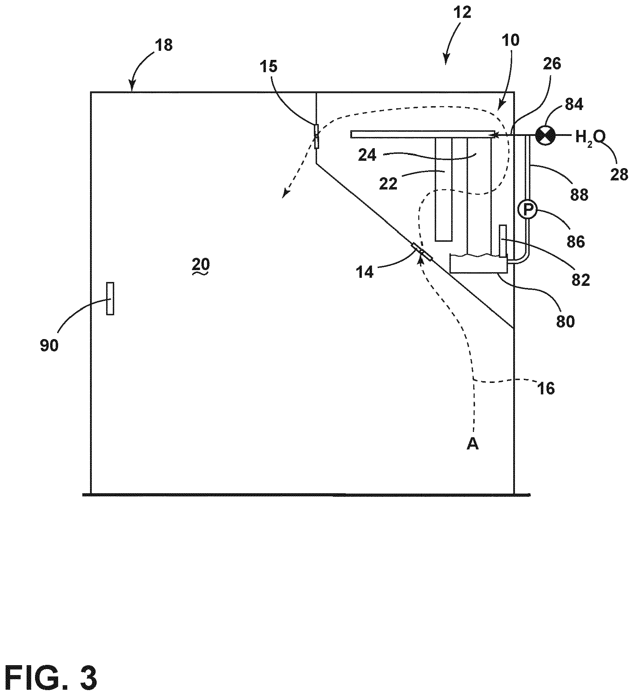

FIG. 3 illustrates a schematic view of a refrigerating appliance according to the invention. The damper 14 may be in the form of a manual or an electronic damper, which may be provided in the form of a valve, a plate, or any other suitable configuration to regulate the airflow 16. The damper 14 may be positioned at an air outlet of the interior 20 such that the interior 20 may be selectively in fluid communication with the humidity control system 10. In this way, airflow 16 may be directed from the interior 20 to the humidity control system 10 when the damper 14 is in an open position, which may be facilitated via airflow control devices, such as blowers (not shown). It is contemplated that a single blower may direct the airflow 16 in multiple directions, or more than one blower may be provided. Therefore, the airflow 16 may also return to the interior 20 via the damper 14. In some examples, more than one damper 14 may be provided, such that a second damper 15 may direct airflow 16 from the humidity control system 10 to the interior 20.

The heater 22 may be positioned to receive the airflow 16 from the interior 20 in order to increase the capacity of the airflow 16 to absorb water vapor in the surrounding air before the airflow 16 reaches, or is drawn through, the porous medium 24. The porous medium 24 is disposed proximate to the heater 22. The heater 22 may be in the form of any suitable heating device, including, but not limited to, a gas heater or an electrical heater. In some examples, the porous medium 24 may include, but is not limited to, zeolites, silica (i.e. silica gel), cements, ceramics, wood, soil, sand, rocks (i.e. limestone) activated carbon, calcium chloride, lithium chloride, and the like. The water inlet 26 may supply the supply of water 28 to the porous medium 24 to keep the porous medium 24 moist. In some examples, the water inlet 26 may be disposed near an upper portion of the porous medium 24 such that the supply of water 28 may be distributed to the top of the porous medium 24 and may moisten the porous medium 24 via gravity.

A tray 80 may be positioned below the porous medium 24 to collect water not absorbed by the porous medium 24. The water level in the tray 80 may be monitored by a level sensor 82, which may be in communication with the controller 30 and may provide the controller 30 with data relating to the water level. The level sensor 82 may be in the form of any suitable sensor for detecting the level of liquid in the tray 80 and may include a continuous level sensor or a point-level sensor. In some examples, the water inlet 26 includes a valve 84 that may be adjusted by the controller 30. Therefore, when the water level in the tray 80 reaches a first predetermined threshold level measured by the level sensor 82, the controller 30 may position the valve 84 in a closed position such that water may not overflow from the tray 80. Likewise, in the event that the water level in the tray reaches a second predetermined threshold level, which may be lower than the first predetermined threshold level measured by the level sensor 82, the controller 30 may position the valve 84 in an open position such that the supply of water 28 may humidify the porous medium 24. Additionally, more than one level sensor 82 may be used to measure multiple water point levels. In this way, a first level sensor 82 may communicate the first predetermined threshold level to the controller 30 and a second level sensor 82 may communicate the second predetermined threshold level to the controller 30.

The humidity control system 10 may further include a pump 86 in fluid communication with the water in the tray 80 and the water inlet 26 via a conduit 88. The pump 86 may be configured to pump water from the tray 80 to the water inlet 26 in order to redistribute the water to the porous medium 24 and prevent overflow from the tray 80. In some examples, upon communication of the water level in the tray 80 reaching the first predetermined threshold level to the controller 30, the controller 30 may operate the pump 86 to transfer water from the tray 80 to the water inlet 26.

Various sensors may be disposed within the interior 20 to detect and measure data that can include, but is not limited to, water vapor content in the air, percentage relative humidity of the air, temperature, etc. In some examples, a humidity sensor 90 may be provided. The humidity sensor 90 may be in communication with the controller 30 (FIG. 2) for data processing. In this way, the humidity sensor 90 may communicate a humidification signal to the controller 30. The humidification signal may communicate to the controller 30 that the relative humidity level in the interior 20 is low, and that a humidification cycle should begin. Alternatively, a user input may be provided such that a user may manually signal the controller 30 that a humidification cycle should begin.

Furthermore, the humidity sensor 90 may be configured to detect a humidification threshold value for communicating to the controller 30 that a humidification cycle should begin and a de-humidification threshold value for communicating to the controller 30 that a de-humidification cycle should begin. In some examples, the humidification threshold value is less than approximately 55% relative humidity and the de-humidification threshold value is more than approximately 65% relative humidity. However, the humidification and de-humidification threshold values may be any suitable value, which may include values in the range of 45%-75% relative humidity. In some examples, a user may select a desired percentage of relative humidity as a target level for the interior 20, which may depend on a type of wine that is being stored. The desired percentage of relative humidity may be in the form of a user input, which may be communicated to the controller 30. The controller 30 may compute the humidification and de-humidification threshold values as a function of the selected relative humidity target level.

Upon receiving the humidification signal, which may include reaching or passing a humidification threshold value, the controller 30 adjusts the damper 14 and may position the damper 14 from a closed position to an open position to direct the airflow 16 to the humidity control system 10 to initiate a humidification cycle. The controller 30 may position the valve 84 in the open or closed positions based on the water vapor content of the interior 20, which may be communicated by the humidity sensor 90. Therefore, upon receiving the humidification signal, the controller may position the valve 84 to an open position such that the supply of water 28 may moisten the porous medium 24. During a humidification cycle, the humidity sensor 90 may be in communication with the controller 30 so that when the target relative percentage humidity is achieved, or detected, the controller 30 may position the damper 14 and/or damper 15 to a closed position to end the humidification cycle. Likewise, the controller 30 may position the valve 84 to a closed position. Additionally, the controller 30 may control the blower(s) for directing the airflow 16 to turn on or off in response to the beginning or ending of a humidification cycle.

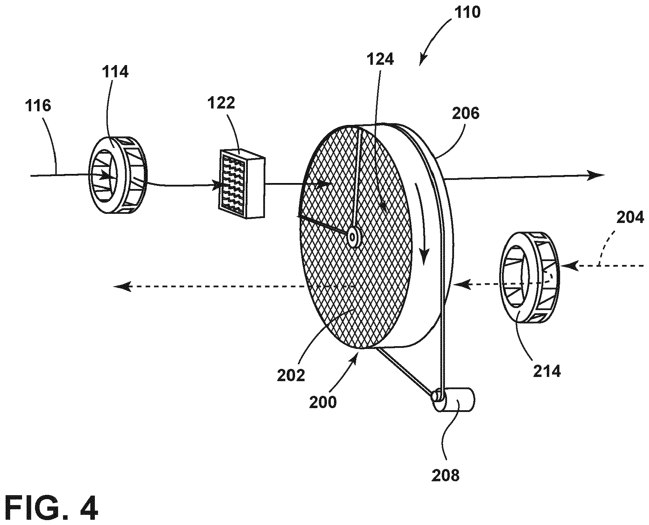

Referring now to FIG. 4, a humidity control system 110 is illustrated. The humidity control system 110, is similar to the humidity control system 10. Therefore, like parts will be identified with like numerals increased by 100. All aspects of the humidity control system 10 may be applicable to the humidity control system 110. The porous medium 124 of the humidity control system 110 may be provided in a rotatable wheel 200, which may be in the form of a desiccant wheel. In specific examples, the porous medium 124 may be a silica gel. Airflow 116 may be drawn through the heater 122 and a first side 202 of the desiccant wheel 200 for humidification, while airflow 204 may be drawn through a second side 206 of the desiccant wheel 200 for de-humidification. A drive motor 208 may be coupled to the desiccant wheel 200 to selectively rotate the desiccant wheel 200. The drive motor 208 may be in the form of a belt drive or any other suitable drive system for rotating the desiccant wheel 200.

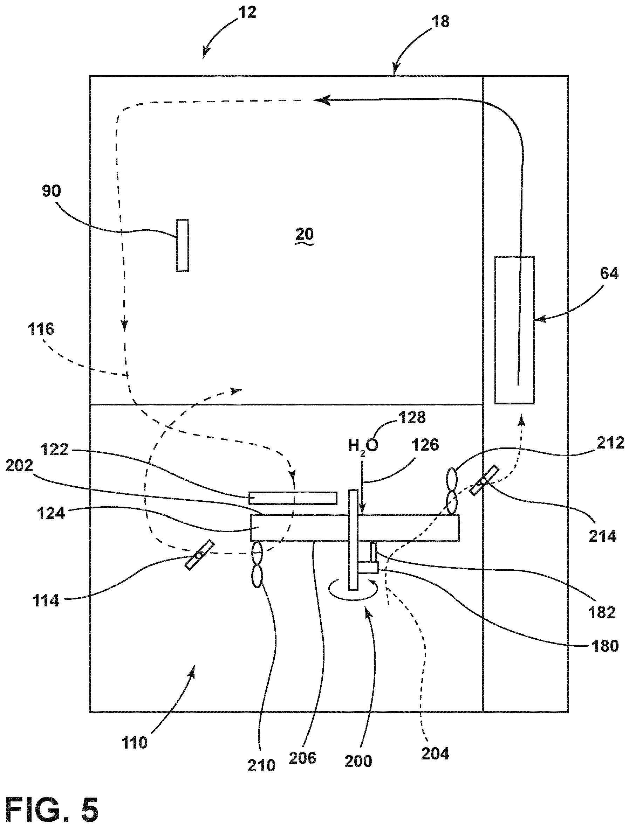

FIG. 5 is a schematic view of the humidity control system 110 further illustrating paths for airflow 116 and 204 during a humidification cycle according to the invention. Upon receiving the humidification signal, which may include reaching the humidification threshold value, the controller 30 (FIG. 2) diverts airflow 116 from the interior 20 to the humidity control system 110 to initiate a humidification cycle. In some examples, diverting the airflow 116 may include adjusting the damper 114, via the controller 30, from a closed position to an open position to direct the airflow 116. The airflow 116 may be further regulated via a blower 210 configured to draw airflow 116 through the heater 122 and the first side 202 of the desiccant wheel 200. Alternatively, the blower 210 may direct, or blow, airflow 116 through the heater 122 and the first side 202 of the desiccant wheel 200. Additionally, the speed of the blower 210 may be varied for further regulation of the airflow 116.

The desiccant wheel 200 may be humidified via the supply of water 128 from the water inlet 126. In some examples, the supply of water 128 may be directed to a portion of the desiccant wheel 200, which may include an upper portion of the first side 202. Therefore, when the airflow 116 is directed through the first side 202, the airflow 116 may become humidified by capturing moisture in the desiccant wheel 200 and returned to the interior 20 for increasing the relative humidity level of the interior 20. Returning airflow 116 to the interior 20 may include forced ventilation. Water not absorbed by the airflow 116 may collect in the tray 180. As previously described, the water inlet 126 may be controlled based on measurements from the water level sensor 182.

Compartment, or interior 20, return air, such as airflow 204, may be directed through the second side 206 of the desiccant wheel 200. The airflow 204 may be regulated via a blower 212 and a damper 214 configured to draw, or direct, airflow 204 through the second side 206 of the desiccant wheel 200 and to the evaporator 64. The second side 206 may by drier than the first side 202 in order to capture moisture from airflow 204. Thus, de-humidified air may be provided to the evaporator 64 for operation of a standard refrigeration cycle. Providing de-humidified air to the evaporator 64 may prevent the formation of ice and consequently, reduce the number of defrost cycles.

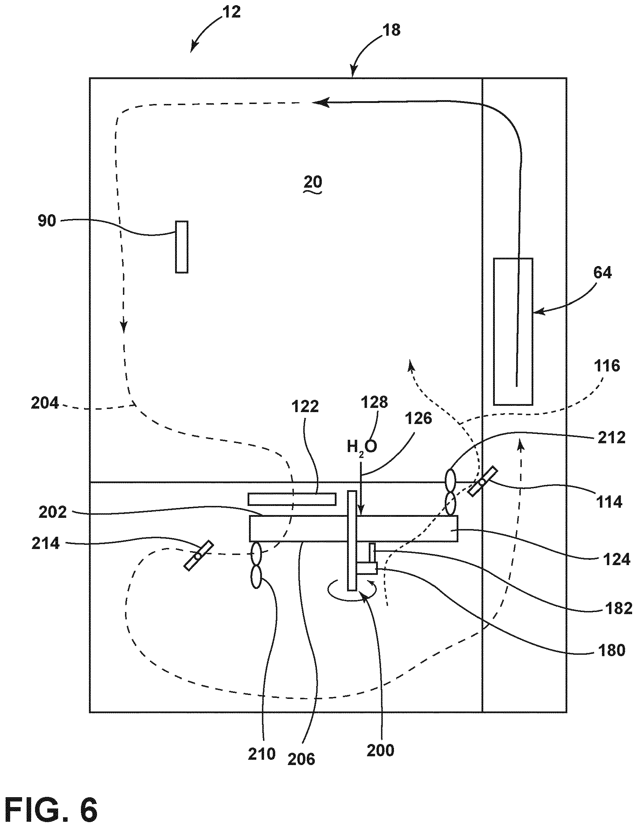

FIG. 6 is a schematic view of the humidity control system 110 further illustrating paths for airflow 116 and 204 during a de-humidification cycle. Upon receiving the de-humidification signal, which may include reaching the de-humidification threshold value, the controller 30 (FIG. 2) may divert airflow 116 from the interior 20 to the humidity control system 110 to initiate a de-humidification cycle. In some examples, diverting the airflow 116 may include adjusting a damper, such as the damper 114, via the controller 30, from a closed position to an open position to direct the airflow 116. The airflow 116 may be further regulated via the blower 210 configured to draw airflow 116 through the heater 122 and the second side 206 of the desiccant wheel 200 and to return the airflow 116 to the interior 20. Alternatively, the blower 210 may direct, or blow, airflow 116 through the second side 206 of the desiccant wheel 200. The speed of the blower 210 may be varied for further regulation of the airflow 116.

In the de-humidification cycle, the desiccant wheel 200 may not be humidified via the supply of water 128 from the water inlet 126. Thus, the valve (FIG. 3) associated with the water inlet 126 may be adjusted to a closed position by the controller 30. Therefore, the second side 206 may by dry in order to capture moisture from the airflow 116. In some examples, the second side 206 may be drier than the first side 202. The de-humidified air may be provided to the interior 20 for reducing the relative humidity level of the interior 20.

Compartment, or interior 20, return air, such as airflow 204, may be directed through the heater 122 and the first side 202 of the desiccant wheel 200. The airflow 204 may be regulated via the blower 212 and the damper 214 configured to draw, or direct, airflow 204 through the first side 202 of the desiccant wheel 200. When airflow 204 is directed through the heater 122 and the first side 202, the airflow 204 may become humidified by capturing the remaining moisture in the desiccant wheel 200 and may then be directed to the evaporator 64 via the damper 214.

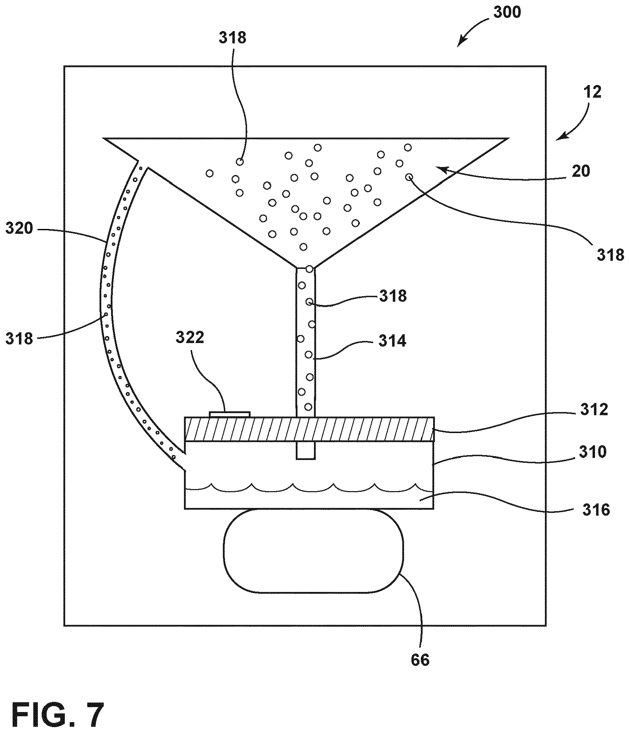

Referring now to FIG. 7, a refrigerating appliance with a humidity control system 300 not in accordance with the invention is illustrated. The humidity control system 300 may include a tray 310 coupled to the compressor 66. The tray 310 may include a cover 312, which may be sealed to the top of the tray 310. The refrigerating appliance 12 may include a drain system including a drain pipe 314, which may be in fluid communication with the interior 20 and the tray 310. The drain pipe 314 may collect water 316, or liquid, from a bottom of the interior 20 and direct the water 316 into the tray 310.

In operation, the compressor 66 may provide heat to the tray 310. In this way, water stored in the tray 310 may become heated and evaporation may occur at a faster rate than the rate of evaporation while the compressor 66 is not in operation. As the water 316 evaporates into water vapor 318, the water vapor 318 accumulated in the air may be in communication with the interior 20 via the drain pipe 314. Thus, the interior 20 may become humidified by the water vapor 318 escaping from the tray 310 and entering the interior 20 via the drain pipe 314. In some examples, the humidity control system 300 may further include a conduit 320, which may be in fluid communication with the tray 310 and an upper portion of the interior 20. In this way, the conduit 320 may provide at least a portion of the water vapor 318 to an upper portion of the interior 20 such that the water vapor 318 may be distributed more evenly throughout the interior 20.

As the tray 310 may be an enclosed environment, the water 316 may evaporate until the surrounding air, including the interior 20, is saturated. In the case when the interior 20 includes a relatively low humidity level, the water 316 in the tray 310 may evaporate more quickly. Therefore, it is within the scope of aspects described herein for the cover 312 to be removable such that water 316 may be manually added to the tray 310 to increase humidity levels of the interior 20. Alternatively, the tray 310 may include a sealable orifice 322 for adding water 316.

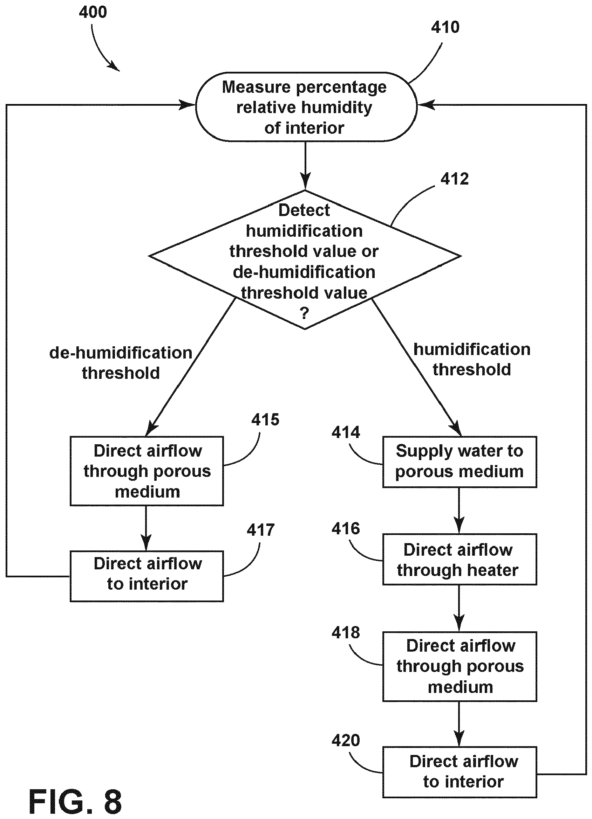

FIG. 8 illustrates a flow chart demonstrating a method 400 of controlling a water vapor content of the interior 20 of the refrigerating appliance 12. The method 400, which does not form part of the present invention, may begin at step 410 where the humidity control system 10, 110, may measure or detect the percentage of relative humidity of the interior 20. Step 410 may include the use of the humidity sensor 90. Next, at step 412, the controller 30 may process data relating to the percentage of relative humidity of the interior 20 and determine whether or not either the humidification threshold value or the de-humidification threshold value have been reached or passed.

If the humidification threshold value has been detected, the method 400 may proceed to step 414 where water may be supplied to a porous medium. Next, at step 416, the controller 30 may operate components of the humidity control system 10, 110 to direct airflow through a heater in order to increase the capacity for the airflow to absorb water. Then, at step 416, the airflow may be directed through the moistened porous medium where the airflow may become humidified. The humidified airflow may be returned, or directed, to the interior 20 at step 420 where the method 400 can begin again at step 410.

If the de-humidification threshold value has been detected at step 412, the method 400 may proceed to step 415 where airflow may be directed through the porous medium. At step 415, the porous medium may be drier than the porous medium at step 418. In this way, the airflow may become de-humidified at step 415. Next, at step 417, the de-humidified airflow may be returned, or directed, to the interior 20 where the method 400 may begin again at step 410.

While the method 400 is described as including steps 410-420, it is possible for the method 400 to include additional or fewer steps. Additional steps may include any suitable step or process as described herein. Additionally, the steps 410-420 in the method 400 may occur in an order other than the order illustrated in FIG. 8. In some examples, the method 400 may include collecting excess water from the porous medium and pumping the excess water onto the porous medium. Furthermore, supplying water to the porous medium at step 414 may occur prior to the determination at step 412, or may not be included in the method 400.

The invention may solve the problem of long term moisture loss inside of a refrigerating appliance, such as a wine cooler. Active moisture control in a wine cooler may enable the preservation of wine. In some aspects, a user may select the percentage of relative humidity desired for the type of wine that will be stored. Furthermore, the number of times a defrost cycle is run in a refrigerating appliance may be reduced due to a reduction of temperature swing during a humidification cycle according to various aspects described herein.

## Claims

1. A refrigerating appliance (12) with a humidity control system (10, 110, 300) , the humidity control system (10, 110, 300) comprising:
at least one damper (14, 114) configured to control airflow (16, 116) between a cabinet (18) defining an interior (20) and the humidity control system (10, 110, 300);
a heater (22, 122) configured to receive the airflow (16, 116);
a porous medium (24, 124) disposed proximate to the heater (22, 122);
a water inlet (26, 126) configured to selectively supply water to the porous medium (24, 124); and
a controller (30) configured to adjust a supply of water (28, 128) to the water inlet (26, 126) and upon a humidification signal the controller (30) adjusts the damper (14, 114) to allow the passage of airflow (16, 116) from the interior (20) of the cabinet (18) to the heater (22, 122) and the porous medium (24, 124) and wherein the airflow (16, 116) is humidified via the porous medium (24, 124) and the humidified airflow (16, 116) is returned to the interior (20) of the cabinet (18).

2. The refrigerating appliance (12) of claim 1, wherein the refrigerating appliance (12) comprises a wine cooler.

3. The refrigerating appliance of either claim 1 or claim 2, further comprising:
a humidity sensor (90) configured to detect and measure a water vapor content of the interior (20).

4. The refrigerating appliance (12) of claim 3, wherein the humidification signal comprises the water vapor content of the interior (20) reaching a humidification threshold value.

5. The refrigerating appliance (12) of any of claims 1-3, further comprising:
a user input configured to communicate the humidification signal to the controller (30).

6. The refrigerating appliance (12) of any of the preceding claims, wherein upon receiving the humidification signal water is supplied to the porous medium (24, 124).

7. The refrigerating appliance (12) of any of the preceding claims, wherein the supply of water (28, 128) is provided to an upper portion of the porous medium (24, 124) and the water moistens the porous medium (24, 124) via gravity.

8. The refrigerating appliance (12) of any of the preceding claims, wherein airflow (16, 116) is directed through a moistened side (202) of the porous medium (24, 124).

9. The refrigerating appliance (12) of any of the preceding claims, further comprising:
a tray (80) proximate to the porous medium (24, 124), the tray (80) configured to collect water.

10. The refrigerating appliance (12) of claim 9, further comprising:
a level sensor (82) configured to measure a water level in the tray (80); and
wherein the controller (30) is configured to adjust the supply of water (28, 128) to the water inlet (26, 126) according to the water level in the tray (80).

11. The refrigerating appliance (12) of any of claims 3-10, wherein the controller (30) is configured to control the supply of water (28, 128) to the water inlet (26, 126) based on the water vapor content of the interior (20) of the cabinet (18).

12. The refrigerating appliance (12)of any of claims 3-11, wherein upon the water vapor content of the interior (20) reaching a de-humidification threshold value the controller (30) adjusts a second damper (15, 214) to allow the passage of airflow (204) from the interior (20) of the cabinet (18) to the porous medium (24, 124) and wherein the airflow (204) is de-humidified via the porous medium (24, 124) and the de-humidified airflow (204) is returned to the interior (20) of the cabinet (18).

13. The refrigerating appliance (12) of claim 12, wherein airflow (204) is directed through a dry side (206) of the porous medium (24, 124) upon the water vapor content of the interior (20) reaching the de-humidification threshold value.

14. The refrigerating appliance (12) of any of the preceding claims, wherein the porous medium (124) is a rotatable porous medium (124) and the supply of water (28, 128) is provided to an upper portion of the porous medium (124) to moisten the porous medium (124) via gravity.

## Patentansprüche

1. Kühlgerät (12) mit einem Feuchtigkeitssteuerungssystem (10, 110, 300), wobei das Feuchtigkeitssteuerungssystem (10, 110, 300) umfasst:
mindestens einen Dämpfer (14, 114), der so konfiguriert ist, dass er den Luftstrom (16, 116) zwischen einem Schrank (18), der einen Innenraum (20) definiert, und dem Feuchtigkeitssteuerungssystem (10, 110, 300) steuert;
ein Heizelement (22, 122), das so konfiguriert ist, dass es den Luftstrom (16, 116) empfängt;
ein poröses Medium (24, 124), das in der Nähe des Heizelements (22, 122) angeordnet ist;
einen Wassereinlass (26, 126), der so konfiguriert ist, dass er dem porösen Medium (24, 124) selektiv Wasser zuführt; und
eine Steuereinheit (30), die so konfiguriert ist, dass sie eine Wasserzufuhr (28, 128) zum Wassereinlass (26, 126) einstellt, und bei einem Befeuchtungssignal die Steuereinheit (30) den Dämpfer (14, 114) einstellt, um den Durchgang des Luftstroms (16, 116) vom Innenraum (20) des Schranks (18) zum Heizelement (22, 122) und dem porösen Medium (24, 124) zu ermöglichen, und wobei der Luftstrom (16, 116) über das poröse Medium (24, 124) befeuchtet wird und der befeuchtete Luftstrom (16, 116) in den Innenraum (20) des Schranks (18) zurückgeführt wird.

2. Kühlgerät (12) nach Anspruch 1, wobei das Kühlgerät (12) einen Weinkühler umfasst.

3. Kühlgerät nach Anspruch 1 oder Anspruch 2, weiter umfassend:
einen Feuchtigkeitssensor (90), der so konfiguriert ist, dass er einen Wasserdampfgehalt des Innenraums (20) erkennt und misst.

4. Kühlgerät (12) nach Anspruch 3, wobei das Befeuchtungssignal umfasst, dass der Wasserdampfgehalt des Innenraums (20) einen Befeuchtungsschwellenwert erreicht.

5. Kühlgerät (12) nach einem der Ansprüche 1-3, weiter umfassend:
eine Benutzereingabe, die so konfiguriert ist, dass sie das Befeuchtungssignal an die Steuereinheit (30) übermittelt.

6. Kühlgerät (12) nach einem der vorstehenden Ansprüche, wobei bei Empfang des Befeuchtungssignals dem porösen Medium (24, 124) Wasser zugeführt wird.

7. Kühlgerät (12) nach einem der vorstehenden Ansprüche, wobei die Wasserzufuhr (28, 128) zu einem oberen Abschnitt des porösen Mediums (24, 124) erfolgt und das Wasser das poröse Medium (24, 124) mittels Schwerkraft befeuchtet.

8. Kühlgerät (12) nach einem der vorstehenden Ansprüche, wobei der Luftstrom (16, 116) durch eine befeuchtete Seite (202) des porösen Mediums (24, 124) geleitet wird.

9. Kühlgerät (12) nach einem der vorstehenden Ansprüche, weiter umfassend:
eine Schale (80) in der Nähe des porösen Mediums (24, 124), wobei die Schale (80) zum Sammeln von Wasser konfiguriert ist.

10. Kühlgerät (12) nach Anspruch 9, weiter umfassend:
einen Füllstandssensor (82), der so konfiguriert ist, dass er einen Wasserstand in der Schale (80) misst; und
wobei die Steuereinheit (30) so konfiguriert ist, dass sie die Wasserzufuhr (28, 128) zum Wassereinlass (26, 126) entsprechend dem Wasserstand in der Schale (80) einstellt.

11. Kühlgerät (12) nach einem der Ansprüche 3-10, wobei die Steuereinheit (30) so konfiguriert ist, dass sie die Wasserzufuhr (28, 128) zum Wassereinlass (26, 126) basierend auf dem Wasserdampfgehalt des Innenraums (20) des Schranks (18) steuert.

12. Kühlgerät (12) nach einem der Ansprüche 3-11, wobei die Steuereinheit (30) einen zweiten Dämpfer (15, 214) einstellt, wenn der Wasserdampfgehalt des Innenraums (20) einen Entfeuchtungsschwellenwert erreicht, um den Durchgang von Luftstrom (204) vom Innenraum (20) des Schranks (18) zum porösen Medium (24, 124) zu ermöglichen, und wobei der Luftstrom (204) über das poröse Medium (24, 124) entfeuchtet wird und der entfeuchtete Luftstrom (204) in den Innenraum (20) des Schranks (18) zurückgeführt wird.

13. Kühlgerät (12) nach Anspruch 12, wobei der Luftstrom (204) durch eine trockene Seite (206) des porösen Mediums (24, 124) geleitet wird, sobald der Wasserdampfgehalt des Innenraums (20) den Entfeuchtungsschwellenwert erreicht.

14. Kühlgerät (12) nach einem der vorstehenden Ansprüche, wobei das poröse Medium (124) ein drehbares poröses Medium (124) ist und die Wasserzufuhr (28, 128) zu einem oberen Abschnitt des porösen Mediums (124) erfolgt, um das poröse Medium (124) mittels Schwerkraft zu befeuchten.

## Revendications

1. Appareil de réfrigération (12) avec un système de commande d'humidité (10, 110, 300), le système de commande d'humidité (10, 110, 300) comprenant :
au moins un registre (14, 114) configuré pour commander un flux d'air (16, 116) entre une armoire (18) définissant un intérieur (20) et le système de commande d'humidité (10, 110, 300) ;
un dispositif de chauffage (22, 122) configuré pour recevoir le flux d'air (16, 116) ;
un milieu poreux (24, 124) disposé à proximité du dispositif de chauffage (22, 122) ;
une entrée d'eau (26, 126) configurée pour alimenter sélectivement en eau le milieu poreux (24, 124) ; et
un dispositif de commande (30) configuré pour ajuster une alimentation en eau (28, 128) de l'entrée d'eau (26, 126), et lors d'un signal d'humidification, le dispositif de commande (30) ajuste le registre (14, 114) pour permettre le passage du flux d'air (16, 116) de l'intérieur (20) de l'armoire (18) au dispositif de chauffage (22, 122) et au milieu poreux (24, 124) et dans lequel le flux d'air (16, 116) est humidifié via le milieu poreux (24, 124) et le flux d'air humidifié (16, 116) est renvoyé à l'intérieur (20) de l'armoire (18).

2. Appareil de réfrigération (12) selon la revendication 1, dans lequel l'appareil de réfrigération (12) comprend un refroidisseur de vin.

3. Appareil de réfrigération selon l'une ou l'autre de la revendication 1 ou la revendication 2, comprenant en outre :
un capteur d'humidité (90) configuré pour détecter et mesurer une teneur en vapeur d'eau de l'intérieur (20).

4. Appareil de réfrigération (12) selon la revendication 3, dans lequel le signal d'humidification comprend la teneur en vapeur d'eau de l'intérieur (20) atteignant une valeur seuil d'humidification.

5. Appareil de réfrigération (12) selon l'une quelconque des revendications 1-3, comprenant en outre :
une entrée d'utilisateur configurée pour communiquer le signal d'humidification au dispositif de commande (30).

6. Appareil de réfrigération (12) selon l'une quelconque des revendications précédentes, dans lequel, lors de la réception du signal d'humidification, de l'eau est alimentée vers le milieu poreux (24, 124).

7. Appareil de réfrigération (12) selon l'une quelconque des revendications précédentes, dans lequel l'alimentation en eau (28, 128) est fournie à une partie supérieure du milieu poreux (24, 124) et l'eau humidifie le milieu poreux (24, 124) par gravité.

8. Appareil de réfrigération (12) selon l'une quelconque des revendications précédentes, dans lequel le flux d'air (16, 116) est dirigé à travers un côté humidifié (202) du milieu poreux (24, 124).

9. Appareil de réfrigération (12) selon l'une quelconque des revendications précédentes, comprenant en outre :
un bac (80) à proximité du milieu poreux (24, 124), le bac (80) étant configuré pour recueillir de l'eau.

10. Appareil de réfrigération (12) selon la revendication 9, comprenant en outre :
un capteur de niveau (82) configuré pour mesurer un niveau d'eau dans le bac (80) ; et
dans lequel le dispositif de commande (30) est configuré pour ajuster l'alimentation en eau (28, 128) de l'entrée d'eau (26, 126) selon le niveau d'eau dans le bac (80).

11. Appareil de réfrigération (12) selon l'une quelconque des revendications 3-10, dans lequel le dispositif de commande (30) est configuré pour commander l'alimentation en eau (28, 128) de l'entrée d'eau (26, 126) sur la base de la teneur en vapeur d'eau de l'intérieur (20) de l'armoire (18).

12. Appareil de réfrigération (12) selon l'une quelconque des revendications 3-11, dans lequel, lorsque la teneur en vapeur d'eau de l'intérieur (20) atteint une valeur seuil de déshumidification, le dispositif de commande (30) ajuste un second registre (15, 214) pour permettre le passage d'un flux d'air (204) de l'intérieur (20) de l'armoire (18) au milieu poreux (24, 124) et dans lequel le flux d'air (204) est déshumidifié via le milieu poreux (24, 124) et le flux d'air déshumidifié (204) est renvoyé vers l'intérieur (20) de l'armoire (18).

13. Appareil de réfrigération (12) selon la revendication 12, dans lequel le flux d'air (204) est dirigé à travers un côté sec (206) du milieu poreux (24, 124) lorsque la teneur en vapeur d'eau de l'intérieur (20) atteint la valeur seuil de déshumidification.

14. Appareil de réfrigération (12) selon l'une quelconque des revendications précédentes, dans lequel le milieu poreux (124) est un milieu poreux rotatif (124) et l'alimentation en eau (28, 128) est fournie à une partie supérieure du milieu poreux (124) pour humidifier le milieu poreux (124) par gravité.
